# EUROPEAN PATENT SPECIFICATION

(11) **EP 2 606 635 B1**
(45) Date of publication and mention of the grant of the patent: **21.02.2018**
(21) Application number: 11746223.4
(22) Date of filing: 15.08.2011
(51) Int. Cl.: H04N 5/00, G06K 19/077, H04N 5/64

(54) **A HOUSING FOR A CHIP CARD CAM**
GEHÄUSE FÜR EIN CHIPKARTEN-CAM
BOÎTIER POUR LECTEUR CAM DE CARTE À PUCE

(30) Priority: 20.08.2010 EP 10173586
(43) Date of publication of application: 26.06.2013
(60) Divisional application: 16188485.3
(73) Proprietor: SmarDTV S.A., 1033 Cheseaux-sur-Lausanne (CH)
(72) Inventor: LAMBERT, Marc, F-13390 Auriol (FR); MUNIER, Jean-Christophe, F-83740 La Cadière d'Azur (FR)
(74) Representative: Leman Consulting S.A.
(86) International application number: PCT/EP2011/064028
(87) International publication number: WO 2012/022712

(56) References cited:
- US-A- 5 339 222
- US-A- 5 846 092
- US-A1- 2007 220 539
- US-B1- 6 272 017

## Description

### INTRODUCTION

The present invention relates to the mechanical aspects related to the assembly and disassembly of an interface device to connect an electronic chip on a chip card to a computing device such as a digital television multimedia unit, a television set, a personal computer or the like, especially when such interface includes conditional access functionality. More precisely, the invention relates to assembly techniques in the manufacture of such interface devices.

### STATE OF THE ART

Various different types of multimedia apparatus such as digital TV decoders, TV sets having integrated digital receivers, personal computers etc. may be used to extract and decode audio/visual data for display on an appropriate viewing apparatus such as a TV display or a personal computer display or other suitable device. It is common for the audio/video data to be protected against non-authorised access, such access being subject to the payment of a fee and such protection being imparted by encrypting the audio/video data according to a pre-determined conditional access policy. The multimedia apparatus usually comprises a conditional access module (CAM) configured to allow a user having paid for access to the audio/visual data to decrypt the encrypted audio/visual data. An important characteristic of a conditional access module is that it must be secure. Security is assured by a combination of the use of strong cryptographic techniques, tamperproof hardware and the use of secure communication protocols. The security is implemented on the CAM itself and in a security module which is usually detachable from the CAM hardware and which is used to store secret keys and to do secure cryptographic functions. In most state of the art conditional access systems the CAM module and the security device are generally mechanically tamperproof and are sealed to prevent access. For example, the Nagra On-Chip Security Technology (NOCS) uses robust encryption and decryption engines, software integrity checks, tamper protection and unique chip Identification numbers to ensure a high level of security.

The conditional access module is generally provided by a pay-TV operator and is adapted to decrypt audio/video data usually arriving in the form of digital data streams from a terrestrial transmitter, a satellite, an internet server, a cable network or a wireless network etc. Along with the audio/video content, the pay-TV operator or provider also makes available the keys or control words necessary to decrypt the content using the conditional access module (CAM), the keys or control words being provided in encrypted format. A security module, reputed to be tamperproof and secure, is provided to the user for storing security information such as keys and rights necessary for authentication and to allow the conditional access module (CAM) to proceed with decryption. The security module usually is in the form of an electronic chip housed on a chip card which can be inserted into a card reader of the conditional access module (CAM). The security module is thus said to be detachable.

An interface device, or contact unit, equipped with a chip card reader is usually provided to allow the user to provide the conditional access module (CAM) with the appropriate authorisation data such as rights and keys from the detachable security module. The interface device usually takes the form of a detachable box of standardised dimensions, such as a PCMCIA module.

United States Patent Application Publication Number 2003/1041365 A1 describes such an interface device. It is a chip card reader comprising a housing including a base plate and a cover plate extending between a plug-in socket and an insertion slot for a chip card. The cover plate and the base plate are each made of metal and plastic and are formed by moulding the plastic onto the metal. The two plates are welded together to make a tamperproof housing. This is in keeping with all PCMCIA conditional access modules in the prior art since it is generally considered desirable to have a tamperproof housing.

United States Patent Publication number 5,846,092 discloses an IC card adaptor comprising a lower housing and an upper housing made from molded plastics, the card adaptor having a latch mechanism along the edge to lock the upper and lower housing together. The latch mechanism is designed to discourage tampering with the assembly by blocking the possibility of any tools being used to pry open the assembly. In this way, the document teaches of a permanently sealed IC card adaptor. The document further goes on to disclose that the IC card adaptor may be dimensioned for use in a PCMCIA slot of a host device. However, since the latch mechanism is made of plastic material and occupies the full length of the assembly, this means that the assembly is unsuited for receiving a credit-card sized chip card due to the fact that the width of a PCMCIA slot is just enough to receive the standard 54mm wide chip card. The assembly with its plastic sides would therefore be unsuitable for what become conflicting simultaneous requirements of housing a chip card and being suitable for insertion into a PCMCIA slot. Furthermore, since the upper and lower housings are made from plastics there would be no room heightwise to allow for a chip card to be inserted. The assembly is clearly not suitable for chip cards. It is worth noting that according to the teaching of this document, plastic material for the upper and lower housings is necessary in order for the tamperproof latch mechanism to function correctly.

United States Patent Publication number 6,272,017 describes a chip card adaptor suitable for use in a PCMCIA slot of a host device. The adaptor comprises a top cover and a bottom cover, both comprising plastic parts, which are connected together at their plastic parts by ultrasound welding, adhesives or other material connections. The plastic parts involved in the connection of the covers are required to be made from plastic since they also function as guidance elements. The adaptor is suitable for a smart card such as is used in security applications such as authentication and is designed with a view to prevent tampering in order to meet security requirements associated with such security applications. However, as will be discussed in the following description, there is cause to re-consider the principle of favouring tamperproof housings for chip card adaptors as security strategies for conditional access modules (CAMs) evolve. Indeed there are certain advantages to be realised in the manufacturing process of such PCMCIA CAMs which benefit from a reasoned reconsideration of the generally accepted practice of having a tamperproof housing.

United States Patent Publication number 5,339,222 discloses a PC Card holder which comprises metallic top and bottom covers which can be snapped together to close the holder. The covers can be readily separable from each other in a non-destructive fashion. The covers engage with each other over a substantial part of the sides of the holder thereby rendering the holder unsuitable for use with a smart card.

### BRIEF SUMMARY OF THE INVENTION

In view of the problems associated with the manufacturing of interface devices comprising a conditional access module and to render the process more cost-effective and material-efficient, and furthermore to meet the particular constraints associated with providing appropriately dimensioned interface devices suitable for use with PCMCIA slots and standard sized chip cards, the present invention provides a housing (H) for an interface device (IF) suitable for use with a conditional access module on a chip card (CC) conforming to a credit card size standard, the conditional access module being suitable for performing secure operations the housing comprising a slot through which the chip card may be inserted, said housing (H):
extending in a longitudinal direction between a first end and a second end, the first end having the slot;
having two opposite sides extending along the longitudinal direction;
dimensioned to comply with a PCMCIA standard, and
comprising:
   a top cover (TC) comprising metallic material; and
   a bottom cover (BC) comprising metallic material;
   said top cover (TC) and said bottom cover (BC) being adapted to interlock with each other;
said housing (H) characterised in that:
the top cover (TC) and the bottom cover (BC) are adapted such that said interlocking takes place between parts of said top cover (TC) and said bottom cover (BC), said parts comprising only metal and being located towards the ends of the housing, at least part of said parts configured to wrap sufficiently around the sides of the interface device so as to provide said interlocking while serving as guides for the chip card during insertion of the chip card; and in that:
   the top cover (TC) and the bottom cover (BC) are further adapted such that thus interlocked, they are detachable from each other in a non-destructive manner.

### BRIEF DESCRIPTION OF THE DRAWINGS

The present invention will be better understood thanks to the detailed description which follows and the accompanying drawings, which are given as non-limiting examples of embodiments of the invention, namely:
Fig. 1 illustrates a chip card and its corresponding interface device.
Fig. 2a, 2b and 2c show cross-sectional details of different embodiments of interface devices with their chip cards inserted.
Fig. 3 illustrates an interface device in which an embodiment of the present invention is deployed.
Fig. 4 shows different views of components comprised in a preferred embodiment of the present invention.
Fig. 4a, 4b, 4c and 4d show detailed views of a selection of different parts of the components comprised in a preferred embodiment of the present invention.

### DETAILED DESCRIPTION

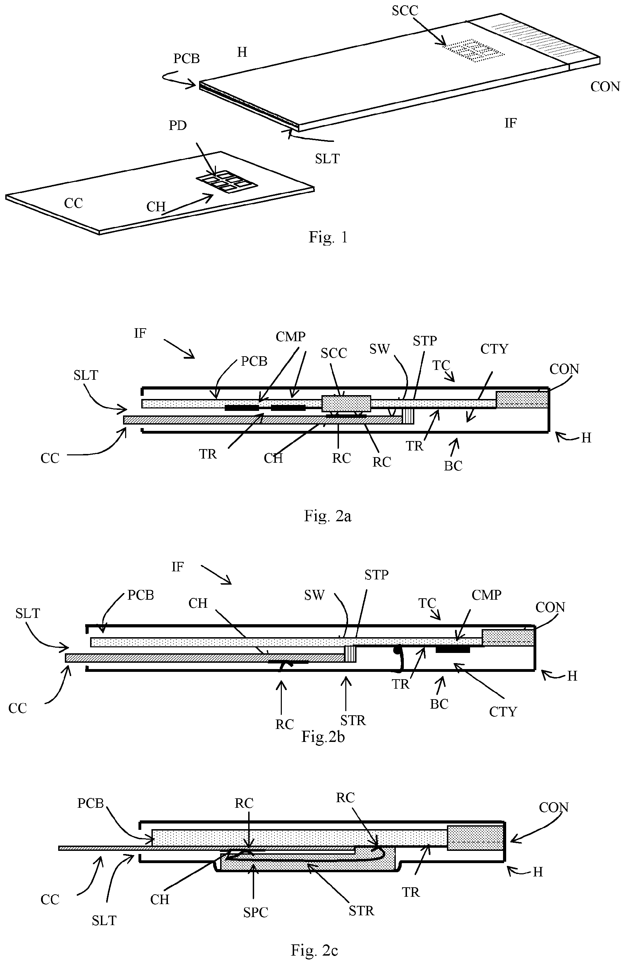

Fig. 1 shows a chip card (CC) with its electronic chip (CH) having a plurality of contact pads (PD) and an example of an interface device (IF) complying with the PCMCIA Standard dimensions. The interface device (IF) comprises a printed circuit board (PCB) located within a housing (H). The housing (H) is open at one end and forms a slot (SLT) through which the chip card (CC) may be inserted and closed at the other end by a connector panel (CON). The printed circuit board (PCB) is connected to the connector panel (CON) and the printed circuit board includes a smartcard connector (SCC) adapted to make contact with the electronic chip (CH) when the chip card (CC) is inserted into the slot (SLT) in the housing (H). Thanks to the connector panel (CON) the interface device (IF) can be plugged into a host device to serve as an interface between the electronic chip (CH) and the host device.

Fig. 2a shows a cross-sectional view of another interface device (IF). A chip card (CC) is also included in the figure. The interface device (IF) comprises a housing (H) of a format whose physical dimensions comply with those specified in the PCMCIA Standard for plug-in cards. The housing (H) may be made of a top cover (TC) and a bottom cover (BC), suitably attached to each other to form a cavity (CTY) within the housing (H). By suitably attached it is understood, at least for prior art conditional access modules, that the top cover and the bottom cover of such housings are permanently attached, either by welding, soldering or gluing for example. However, as will be described below, according to a preferred embodiment of the present invention, the top cover and the bottom cover are attached in a manner which allows them to be easily and non-destructively detached from one another. One end of the housing (H) is closed off by a connector panel (CON) designed to make contact between the interface device (IF) and a host device such as a computer, a multimedia unit or the like, having an accommodation channel to receive the PCMCIA-format interface device (IF). The accommodation channel has a socket at its end for connecting to the connector panel (CON) once the interface device (IF) is inserted into the accommodation channel. The other end of the housing (H) is open and forms a slot (SLT) of appropriate dimension to receive a standard credit card-sized chip card (CC) into the cavity (CTY) formed between the top cover (TC) and the bottom cover (BC). Within the housing (H) there is a printed circuit board (PCB), connected to the connector panel (CON). The printed circuit board (PCB) is disposed within the cavity (CTY) in such a way as to leave a space between the bottom cover (BC) and the printed circuit board (PCB). The space is of sufficient dimension for the chip card (CC) to be able to be inserted at least part of the way into the cavity (CTY) via the slot (SLT). The depth to which the chip card (CC) may be inserted may be dictated using a suitably disposed card stop (STP) within the cavity (CTY) to limit the travel of a chip card (CC) once inserted into the slot (SLT). A means for detecting the presence of the chip card (CC) may also be included, usually via one or more detector switches (SW) placed on the printed circuit board (PCB), the switch or switches (SW) being activated by the chip card (CC) as it makes its way towards the card stop.

The printed circuit board (PCB), also shown in Fig. 2a, comprises a smart card connector (SCC) having a set of resilient contacts (RC). The resilient contacts (RC) are connected to conductive tracks (TR) on the printed circuit board (PCB) and these conductive tracks (TR) may be connected either directly to any of the connections on the connection panel (CON) or via any number of passive or active electronic components (CMP) designed to serve a particular predetermined function. Other conductive tracks (TR) may be incorporated on the printed circuit board (PCB) to form connections between the electronic components (CMP) or from an electric component (CMP) to the connection panel (CON). For example in the case where the interface device (IF) serves as a conditional access module (CAM) having decryption capabilities, such electronic components (CMP) and the conductive tracks (TR) may be configured to form an interface with the electronic chip (CH), realise the required decrypting function and communicate with the host device via the connection panel (CON).

As is generally known, a chip card (CC) usually takes the physical form of a standard credit card and it has an electronic chip (CH) embedded, usually near one corner. Electrical connection to the electronic chip is achieved via a set of contact pads (PD). The contact pads (PD) appear on a face of the chip card and preferably do not coincide with any edges of the card. A chip card (CC) with its electronic chip (CH) is illustrated in Fig. 1 and in Fig. 2a. The chip (CH) has a plurality of terminals through which electronic communication may be achieved. In one embodiment such communication is via hard-wired connections, whereas is another embodiment the communication could be wireless. In the embodiment using hard-wired connections, the plurality of terminals is connected to a set of a plurality of contact pads (PD) on a surface of the chip card (CC). When the chip card (CC) is inserted into the cavity (CTY) of the interface device (IF) via the slot (SLT), the contact pads (PD) are urged against the resilient contacts (RC) of the printed circuit board's (PCB) suitably positioned smart card connector (SCC) such that electronic contact is formed between the electronic chip (CH) and the printed circuit board (PCB).

Fig. 2b illustrates another possible embodiment of an interface device upon which an embodiment of the present invention may be deployed. As described above, an interface device (IF) comprises, among other things, a housing (H) formed by a top cover (TC) and a bottom cover (BC). This embodiment is different in that the printed circuit board (PCB) is devoid of any smart card connector (SCC). Instead, connection between the chip and the printed circuit board is made through conductive strips (STR) lying in or on the bottom cover. Again in contrast to the prior art, the assembly of the housing used for the interface device, includes attaching the top cover to the bottom cover in such a way that they may be readily and non-destructively detached from each other.

Fig. 2c shows another embodiment of an interface device, similar to the embodiment of Fig. 2b but with an insulating spacer (SPC) being added to incorporate the conductive strips (STR). It is worth noting that according to how the interface device is constructed, the housing may extend in a longitudinal direction to cover substantially the whole device as in Fig. 2a, 2b, 2c or it may stop short of the end of the connector panel as in Fig. 1. The housing is understood then to be the external casing which wraps fully around at least a part of the interface device.

Any of the above described interface devices present an opportunity for an embodiment of the present invention to be deployed.

According to the prior art in the domain of conditional access modules, every effort is made to render the module physically inaccessible. The prior art modules are usually permanently sealed using solder spots or non-detachable clips or some other such tamperproof locking mechanism. However these prior art modules present some serious inconveniences for cost efficient manufacturing of conditional access modules (CAMs), which will be outlined below.

During the process of manufacturing an interface device for a conditional access module (CAM) there is a stage in the process where the CAM is personalised. Certain encryption keys are embedded within the CAM and the CAM and the interface device are then attributed a unique number. A ticket is stuck onto the interface device, usually somewhere on the outside of the device, indicating its unique number. Since the state of the art modules are sealed, this means that when they go on to be tested, if there are any faults, then the whole module has to be thrown away. Not only does this represent a waste from the point of view of the hardware, but there is also a cost associated with the fact that keys have already been attributed at this stage and they can no longer be used since the ticket, which is also used to track the CAM hardware, is stuck onto the sealed device. If the device tests as faulty, then the whole module including the printed circuit board, the housing and the keys have to be discarded. According to the present invention, since the module is not sealed, it is still possible to repair the module should it be found to have a fault during test. Indeed, the ticket can be stuck onto the CAM hardware within the module, preferably onto the printed circuit board, since the printed circuit board will only be discarded if it is beyond repair. Since the module is repairable there is no waste - if the housing has a physical/mechanical defect, then the housing is replaced; if the printed circuit board has a fault, then it is repaired; if a component on the printed circuit board is found to be faulty it may be replaced etc. It is worth noting that in a non-sealed housing comprising a conditional access model, other types of intervention may be achieved by the manufacturer after final assembly, such as the updating of keys or the replacement of a circuit for example.

It is also worth noting that the present invention affords advantages connected with after-sales activities, recycling at end of life and re-use of parts from an ecological point of view since individual parts or subassemblies are repairable, modifiable, interchangeable and reusable.

The present invention takes advantage of the fact that nowadays the high level of security designed into a conditional access module (CAM) is now focused on the software and the system design and it is no longer easy for a malicious third party to break the security simply by having access to the hardware. In spite of the historical tendency to build sealed units to house CAMs, it is thought that there is no longer any benefit achieved by a malicious third party being able to access the hardware and so it is now of benefit from a manufacturing point of view to leave the hardware accessible since having access to the hardware does not present any advantage the malicious third party.

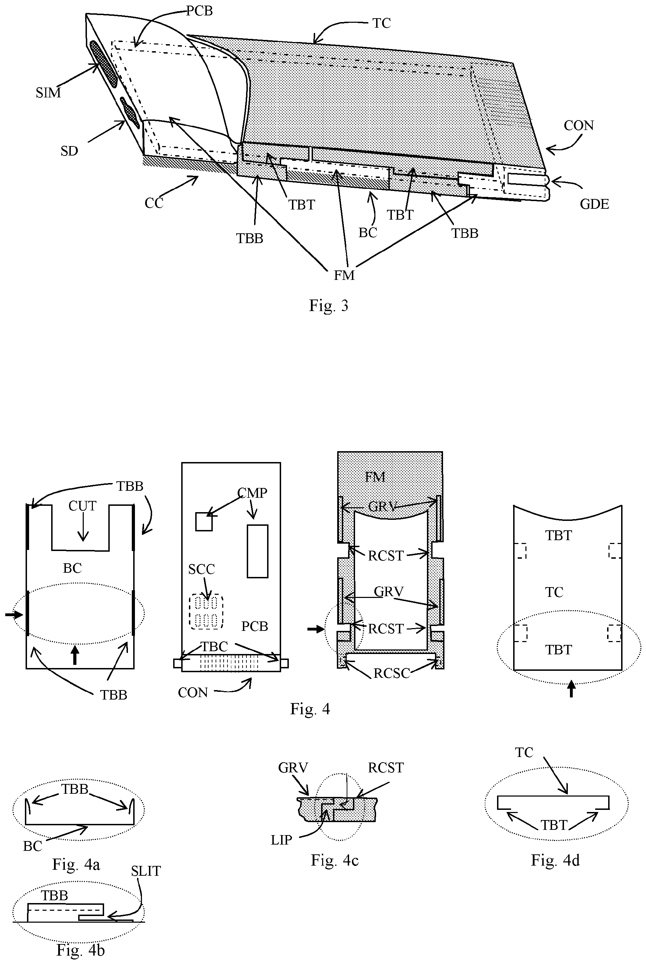

A preferred embodiment of the present invention is shown in Fig. 3. An interface device (IF) is shown comprising a housing which is compatible with the PCMCIA Standard. The housing comprises a top cover (TC) and a bottom cover (BC). The interface device further comprises a printed circuit board (PCB), which is connected to a connector panel (CON) at its bottom end, otherwise known as the closed end or connector panel end. The connector panel is used to connect from the interface device to a host device. The printed circuit board and connector panel assembly are placed in a specially adapted frame (FM), which is made from a non-conductive material, preferably plastic. The frame is clipped into the bottom cover and then the top cover is placed over the bottom cover/frame/printed circuit board assembly and interlocked with bottom cover thanks to specially designed interlocking tabs in the top and bottom covers. In another embodiment where a spacer (SPC) is used, as in Fig. 2c, the procedure is as above except that the spacer is placed in the bottom cover before the printed circuit board, with its connector panel, is placed onto the bottom cover. In this embodiment, the frame extends in a longitudinal direction past the housing. The frame also extends in a vertical direction past the height of the housing since it also includes further interfaces for a SIM card and for an SD card to be connected to the interface device. In other embodiments the frame is of a simpler design, devoid of the SIM card connector and the SD card connector and therefore does not present such a large oversize with respect to the industry standard for such interfaces. As mentioned previously, according to the embodiment, the housing need not fully enclose the interface device along its entire length. The housing, and indeed at least part of the interface device, complies with the PCMCIA standard in its dimensions but the frame in this embodiment will protrude from the accommodation channel of a host device, which is not considered to be inconvenient in the domain of conditional access television for example.

Interface devices such as the one of the present invention exist and may be made of metal or plastic materials. Plastic materials have the disadvantage in that they need to have a certain minimum thickness. Depending on which part of the interface device is made in plastic materials, this could seriously restrict the functionality of the interface device. For example, in some devices the housing comprises plastic materials. In this case, since the housing has to conform to a PCMCIA format to be able to fit into a PCMCIA accommodation channel, this means that much of the height of the interface device is taken up by the plastic material. By using sheet metal for the housing, the present invention has the advantage that more room remains within the housing to be able to place more components and thereby take advantage of having more functionality. In the case where the cost of the components making up the interface is important, cheaper components sometimes being bulkier than their more expensive counterparts, the increase in space afforded by the use of sheet metal for the housing allows for these cheaper components to be used.

Sheet metal having a thickness of down to around 0.2mm can be used in embodiments of the present invention. At this level of thickness the housing can be made sufficiently rigid. If plastic were to be used, then in order to achieve the same rigidity, a minimum of 0.8mm thickness is the best which could be hoped for. The use of 0.2.mm sheet metal rather than a plastic material for the housing is therefore an advantage. At worst, the thickness of plastic required to make the housing would simply be too much to allow the interface device for the present invention to be realised. At best the use of sheet metal material for the housing rather than plastic material would allow for more height to be available within the housing. This would allow for the placement of more components within the housing, while at the same time providing sufficient mechanical stability and temperature resistance characteristics to the housing. Good temperature resistance characteristics are desirable for the housing to be able to sufficiently and effectively dissipate heat generated by or around the interface device.

In an embodiment of the present invention a further contribution to the mechanical stability and rigidity of the interface device is afforded by the combination of the metal housing with the plastic frame mentioned above. The plastic frame, by definition, substantially follows the contours of the PCB, thereby leaving sufficient opening on the PCB to place components (see Fig. 4). Since the plastic frame may be of a thickness approaching the total allowed thickness of a PCMCIA module without impinging on the space allowable for components within the housing, the frame can be designed to be of sufficient thickness to contribute to the mechanical stability of the interface device when the frame cooperates with the housing. Further rigidity is provided with the combination further including the printed circuit board.

Considering that the interface device for the present invention is intended for use in a standard PCMCIA accommodation channel of a host device, it follows that the width of any part of the device which is intended to be lodged within the PCMCIA accommodation channel must not greatly exceed 54mm. Furthermore, since the interface device is intended to house a conditional access module in the form of an electronic chip integrated onto a chip card and since the width of a standard chip card is also 54mm, careful consideration regarding the total width of the interface device has to be made, especially at parts where both the chip card and the interface device have to fit inside the PCMCIA accommodation channel. Even more careful consideration has to be made at the part of the interface device where the card guides are located since the width of the card plus the guides must not be too much in excess of 54mm, which would impede the passage of the interface device into the PCMCIA accommodation channel. These considerations have led to embodiments of the present invention which take further advantage of the fact that the housing parts are made of sheet metal and will be further explained later.

According to an embodiment of the present invention, the top cover of an already assembled interface device may be readily detached from the bottom cover manually and in a non-destructive fashion thereby allowing for the interface device to be disassembled and reassembled. The interface device is adapted such that simple manual assembly and disassembly of the device may be readily achieved. Alternatively, a tool may be used in order to increase throughput in a manufacturing environment. Irrespective of whether a tool had been used to assemble the interface device or whether it had been assembled by hand, according to the invention the interface device may be readily disassembled, either manually or using a tool.

Fig. 4 shows some more detail of how the various parts are assembled together and how they work in combination to provide a tight-fitting and robust housing for the interface device, according to a preferred embodiment of the present invention. Preferably, the interface device thus assembled conforms to the PCMCIA standard, at least along a part of the length of the interface device so that the interface device may be connected to a host device. Fig. 4 shows the bottom cover (BC), the printed circuit board (PCB) with the connector panel (CON) attached, the frame (FM) and the top cover (TC).

The bottom cover (BC) has a set of hooked tabs (TBB). In this case it has four of them, which are placed two on either side of the top cover, symmetrically about a central axis taken in the longitudinal direction of the cover. In a preferred embodiment of the present invention the top cover is made from metal and it is a simple task to create the hooked tabs by bending appropriately shaped protruding edges up and turning the ends back down upon themselves to form hooks with the extremities of the hooks pointing back towards the bottom cover as shown in the detailed view of Fig. 4a. The hooked tabs also comprise small slits (SLIT) in the sides. These are shown in the detailed view of Fig. 4b.

Also shown in Fig. 4 is the top cover (TC), which has four flat tabs (TBT) which coincide with the slits (SLIT) of the four hooked tabs (TBB) on the bottom cover (BC). As shown in the detailed view of Fig. 4d, for a top cover made from an appropriate metallic material, these flat tabs can be readily made by vertically folding down the appropriately shaped edges of the top cover and then folding part of the folded down edges inwards again to make substantially rectangular tabs parallel to the top cover but lying beneath the top cover. These tabs are adapted to fit into the slits in the hooked tabs of the bottom cover to provide interlocking of the top cover with the bottom cover.

The printed circuit board (PCB) is shown in Fig.4 with a smartcard connector (SCC) and some electronic components (CMP). It is shown connected to the connector panel (CON). The connector panel has two tabs (TBC), one on either side with respect to a central longitudinal axis of the interface device.

According to an embodiment of the present invention, two tabs on the bottom cover are arranged opposite each other towards the open end of what will become the housing of the interface device and two tabs on the bottom cover are arranged opposite each other towards the closed end of what will become the housing of the interface device. The tabs on the top cover are suitably arranged to correspond to those on the bottom cover. Since part of the housing has to fit inside an accommodation channel of a host device, where the accommodation channel complies with a PCMCIA standard, the width between the top cover tabs at the closed end of the interface device is 54mm. On the other hand, the width between the top cover tabs at the open end of the interface device is slightly larger than 54mm. The fact that the tabs towards the open end of the interface device are slightly wider apart than the width of a standard sized chip card allows for these tabs to be used to facilitate the guidance of the chip card into the slot of the interface device. These tabs therefore have dual functions of guiding the chip card and of interconnecting the top cover and the bottom cover. The card may be inserted into the slot, guided by the tabs at the open end of the interface device until the card is stopped either by a suitably arranged card stop or simply by the tabs at the closed end, the width between which being substantially the same as that of the card. The sides of the card will therefore substantially coincide with the sides of the housing. The sides of the housing must be devoid of any mechanism which will impede the movement of the chip card. Regarding the width between the tabs towards the open end of the device, a width of 54.5mm between tabs is sufficient to allow the tabs to serve as a guide for the chip card yet not too wide to impede the insertion of substantially the entire housing of the interface device into a standard PCMCIA accommodation channel. This illustrates another advantage afforded by the use of 0.2mm sheet metal in forming the tabs/guides. By using 0.2mm sheet metal the maximum width allowed whereby the housing will still be compatible with the PCMCIA standard is readily met.

In summary, according to an embodiment of the present invention, the connection between the top cover and the bottom cover takes place only place only at the tabs, which are placed towards the ends of the housing. An opening along the edge of the housing is left so as not to impede the movement of a chip card. The tabs towards the closed end of the interface device are spaced by a width of a standard credit card i.e. 54mm, while the tabs towards the open end of the interface device are spaced by a width slightly over that of a standard credit card in order to serve as a guide for the chip card during insertion of said card. Thanks to this arrangement, the interface device with its chip card can be inserted into the PCMCIA-dimensioned accommodation channel of a host device over a length of the interface device defined by the entire length of the housing. In some embodiments of the present invention a part of the interface device extending from the open end of the housing to the open end of the interface device is left protruding from the PCMCIA accommodation channel. This region is called the extended region of the interface device. Indeed the protrusion of the extended region is unavoidable in some embodiments due to the dimensions of the extended region being incompatible with the PCMCIA standard. This is not seen as a problem and indeed may be seen as an advantage since the extended region may be used to incorporate extra features.

It is worth noting that thanks to the use of metal connecting tabs, the part of the housing which includes the tabs can easily fit inside the accommodation channel. If the interface device were required to be sealed, then it would be advantageous for the connecting elements for top and bottom covers to be made from plastic as the welding or otherwise connecting of plastic is easier. In such a case the connecting elements of the interface device would be required to remain outside the accommodation channel since the resulting width of the device would be too much. Similarly, if the card guides were to be made from plastic, then the guides would need to remain outside of the channel. Thanks to the use of metal tabs which serve as guides and as connecting elements, the entire housing can fit within the accommodation channel.

According to one embodiment of the interface device, the chip card is inserted into the slot only partially, with the rest of the chip card occupying an area beneath the extended region. In such cases it may be desirable to include a company logo or other publicity material associated with one or other aspect of the interface device or associated security system since it will be visible on the exterior of the accommodation channel when the device is in use.

When inserted into the accommodation channel of a host device, due to the arrangement of the tabs and/or card stop described above, a substantial part of the interface device, (at least from the open end tabs to the extremity of the open end), will protrude from the host device, since the tabs towards the open end of the device are spaced at a width slightly exceeding that of the accommodation slot. It also follows that a substantial part of the chip card will also protrude. This presents no inconvenience whatsoever and even allows for extra features to be added onto the protruding part of the interface device, such as a SIM card socket or an SD card socket. A further advantage may also be gained in that since the chip card will not be so close to the connector end of the interface device, any components which have to treat signals requiring to be transmitted quickly to or from the host device may be located closer to the connector end since the chip and the chip card socket will be located further away from the connector panel.

Thanks to the top and bottom covers, and consequently the corresponding tabs, being made from sheet metal, the dimensional constraints imposed on an interface device complying with a PCMCIA standard are easily met while meeting the needs associated with the tabs having to function as guides for the chip card and as connecting mechanisms for the housing as described above.

Finally, Fig. 4 also shows the frame (FM). The frame has an area cut out at one end into which the connector panel (CON) can fit. It also has two connector panel recesses (RCSC) cut out on the underside (bottom surface or bottom face) of this end, into which the connector panel's tabs (TBC) may fit. The frame further has four grooves (GRV) formed on the top surface (top face), coincident with the hooked tabs (TBB) of the bottom cover (BC). These grooves are of suitable dimension to receive the extremities of the hooked tabs when the frame is pushed down onto the bottom cover. Finally, the frame has four top cover tab recesses cut out (RCST) which are suitable to allow the top cover tabs to pass at least part of the way through from the top surface of the frame. As can be seen from the detailed view in Fig. 4c, the frame's top cover tab recesses further comprise a lip (LIP). This lip allows for the top cover tabs to be slid horizontally after passing through the recesses in a vertical direction so that once assembled, the top cover flat tabs lie under the lip on the frame recesses. By horizontally it is meant in a direction towards either of the ends of the interface device. In the figure the top cover is assembled by sliding towards the open end of the interface device.

To assemble an interface device according to a preferred embodiment, the printed circuit board, already connected to its connector panel, is attached to the frame by inserting the connector panel's tabs into the connector panel recesses in the frame. The frame has a profiled edge, which allows the printed circuit board to fit neatly within the profile of the underside of the frame, thus making a snug fit thanks to the tabs and the edge of the frame. The frame and printed circuit board assembly are then snapped into position on the bottom cover, preferably by pushing the printed circuit board down against the bottom cover tabs. The tabs, being made of metal and having a certain amount of resiliency, will splay out allowing the printed circuit board to pass and then, upon springing back towards their initial position, the hooked part of the tabs will hook loosely around the grooves on the top surface of the printed circuit board. The correct position is therefore defined by the hooked tabs of the bottom cover coinciding with the grooves of the frame. With the hooks thus positioned around the grooves, a small amount of vertical movement is allowed between the frame and the bottom cover. This movement is preferable since it later will allow for a chip card to be inserted between the bottom cover and the printed circuit board. Finally the top cover is placed over the top by inserting the top cover's tabs into the top cover recesses of the frame in the vertical direction. Once the tabs are inserted, the top cover is slid horizontally until the top cover tabs slide into the slits in the bottom cover tabs. With the top cover tabs properly slid into place, a least a part of each of these tabs grip beneath the lip of the top cover recesses in the frame thereby pulling the frame in an upward direction away from the bottom cover and so maintaining the space or slot (SLT) for a chip card to be inserted between the printed circuit board and the bottom cover, while at the same time causing the hooks of the bottom cover's hooked tabs to be pushed more firmly into the grooves thus creating a very compact and snuggly fitting housing.

Thanks to the tabs having the dual functions of providing a guide for the chip card as it is inserted in the slot and providing an adequate interlocking mechanism between the top and bottom covers while holding the interface device together, there is no need for any intermediary parts within the interface device either to perform guidance functions or to contribute to the holding together of the device or to participate in any attachment between the top and bottom covers. Consequently, at least part of the top cover tabs and at least part of the bottom cover tabs necessarily have to wrap at least part way around the sides of the interface device (Figs, 3, 4, 4a, 4b, 4c, 4d).

Once assembled in the manner described above, the interface device may be readily disassembled and reassembled as required. None of the components are degraded by the disassembly and/or reassembly process, which may be readily carried out manually or may be automated using appropriately adapted tools. Disassembly may thus be achieved even after final assembly of an interface device comprising a conditional access module even if the device is ready to be shipped from the factory or already in operation at a user's premises.

In an embodiment of the present invention, the bottom cover has a piece cut away (CUT). The purpose of this is to allow an identifying sticker attached to the printed circuit board to be visible when the interface device is assembled. This sticker is used for tracking purposes during manufacturing. It has a further use once the chip card is inserted between the printed circuit board and the bottom cover as it allows the card to be visible while the interface device is being used. Suppliers of chip cards or suppliers of the conditional access module often like to display their company logo on the chip card. Having the piece cut away allows this goal to be achieved.

In another embodiment of the present invention, a spacer with conductive strips is inserted between the bottom cover and the printed circuit board/frame assembly. An example of an interface device which requires such a spacer is shown in fig. 2c. Preferably, the bottom cover has a small depression to allow extra space for the spacer to sit.

Embodiments of the interface device for the present invention can be readily disassembled manually by simple sliding of the interlocking tabs away from each other, the tabs being interlocked at the sides of the device. However, in order to provide a security feature which prevents accidental opening of the interface device during manipulation or as a result of a mechanical shock following a fall for example, another embodiment of the present invention provides for a releasable latch mechanism to be included to secure the top case to the frame. This is sufficient to maintain the entire device in its assembled state since the top cover, when it is correctly positioned, pulls on the slits of the bottom cover and on the lips of the frame, which in turn maintains the hooks of the bottom cover tabs firmly within the grooves of the frame. According to a particular embodiment featuring this releasable latch mechanism, the frame is modified to include two latches adapted to lock into appropriately shaped extensions on the top case once the top case is slid into place when the top cover tabs are slid under the lips of the frame recesses. It is appropriate to include these top cover extensions at the end which is nearest the part of the frame which is located towards the extended region of the interface device, especially in the case where this part of the frame provides a large oversize suitable for a SIM card to be inserted for example, since the extensions can be easily slid beneath the frame in this area. Appropriate latches are located at this area of the frame such that in their latched position, after the top cover has been slid into place, they spring up in order to lock the top cover extensions in place. The latches may be released by inserting pointed objects (or an appropriately configured tool) into corresponding holes in the frame which allow the latches to be pushed away from their latched positions thereby releasing the top cover extensions and allowing the top cover to be slid out of the frame.

It is to be understood that terms top cover and bottom cover as far as they are used throughout this description are interchangeable. Consequently, different permutations are possible such as for example having the slotted tabs on the top cover and the other type of tabs on the bottom cover is also a possibility in an embodiment of the present invention. Similarly, the top cover may appear below the printed circuit board and the bottom cover above the printed circuit board is also possible, as is having the grooves on the bottom face of the frame instead of the top etc.

In all of the embodiments of the present invention, the housing is not permanently sealed. No glue, solder or welded joint is required and the top cover is held to the bottom cover simply by the top cover tabs sliding into the slits of the hooked tabs.

The present invention takes advantage of the fact that nowadays the high level of security designed into a CAM is now focused on the software and the system design and it is no longer easy for a malicious third party to break the security simply by having access to the hardware. In spite of the historical tendency to build sealed units to house CAMs, it is thought that there is no longer any benefit achieved by the malicious third party being able to access the hardware and so it is now of benefit from a manufacturing point of view to leave the hardware accessible since having access does not advantage the malicious third party.

## Claims

1. A housing (H) for an interface device (IF) suitable for use with a conditional access module on a chip card (CC) conforming to a credit card size standard, the conditional access module being suitable for performing secure operations, the housing (H) comprising a slot (SLT) through which the chip card (CC) may be inserted, said housing (H):
extending in a longitudinal direction between a first end and a second end, the first end having the slot;
having two opposite sides extending along the longitudinal direction;
dimensioned to comply with a PCMCIA standard, and
comprising:
a top cover comprising metallic material (TC); and
a bottom cover comprising metallic material (BC);
said top cover (TC) and said bottom cover (BC) being adapted to interlock with each other;
said housing (H) **characterised in that**:
the top cover (TC) and the bottom cover (BC) are adapted such that said interlocking takes place between parts of said top cover (TC) and said bottom cover (BC), said parts comprising only metal and being located towards the ends of the housing, at least part of said parts configured to wrap sufficiently around the sides of the interface device so as to provide said interlocking while serving as guides for the chip card during insertion of the chip card; and **in that**:
the top cover (TC) and the bottom cover (BC) are further adapted such that thus interlocked, they are detachable from each other in a non-destructive manner.

2. The housing (H) according to claim 1, wherein said top cover and said bottom cover are made entirely from sheet metal.

3. The housing (H) according to either of claims 1 or 2, wherein said interlocking takes place at the sides of the housing (H).

4. The housing (H) according to any of claims 1 to 3, wherein said housing (H) is further **characterised in that** the top cover (TC) and the bottom cover (BC) are adapted to be manually detachable from each other.

5. The housing (H) according to any of claims 1 to 4, wherein the top cover comprises:
a first two top cover tabs (TBT) located on opposite sides of the top cover (TC) towards the first end; and
a second two top cover tabs (TBT) located on opposite sides of the top cover (TC) towards the second end;
said top cover tabs (TBT) having:
a first section substantially perpendicular to a plane of the top cover (TC); and
a second section substantially perpendicular to the first section and lying beneath the top cover (TC);
and wherein the bottom cover (BC) comprises:
a first two bottom cover tabs (TBB); and
a second two bottom cover tabs (TBB);
each of the bottom cover tabs (TBB) corresponding to one of the top cover tabs (TBT) and adapted such that said interlocking takes place with its corresponding top cover tab (TBT);
said bottom cover tabs (TBB) having:
a first section, substantially perpendicular to the bottom cover (BC) and having a slit (SLIT) adapted to be interlocked with the second section of the corresponding top cover tab (TBT).

## Patentansprüche

1. Gehäuse (H) für eine Schnittstellenvorrichtung (IF), die für die Verwendung mit einem Zugangsberechtigungsmodul auf einer Chipkarte (CC) geeignet ist, die einem Größenstandard von Kreditkarten entspricht, wobei das Zugangsberechtigungsmodul zum Ausführen sicherer Operationen geeignet ist, das Gehäuse (H) umfasst einen Schlitz (SLT), durch den die Chipkarte (CC) eingefügt werden kann, und das Gehäuse (H):
verläuft in Längsrichtung zwischen einem ersten und einem zweiten Ende, wobei das erste Ende den Schlitz hat;
hat zwei gegenüberliegende Seiten, die entlang der Längsrichtung verlaufen;
ist dimensioniert, um einem PCMCIA-Standard zu entsprechen, und
umfasst:
eine obere Abdeckung mit metallischem Material (TC); und
eine Bodenabdeckung mit metallischem Material (BC);
die obere Abdeckung (TC) und die Bodenabdeckung (BC) sind geeignet, um sich miteinander zu verzahnen;
wobei das Gehäuse (H) **dadurch gekennzeichnet ist, dass**:
die obere Abdeckung (TC) und die Bodenabdeckung (BC) derart angepasst sind, dass die Verzahnung zwischen Teilen der oberen Abdeckung (TC) und der Bodenabdeckung (BC) erfolgt, wobei diese Teile nur Metall umfassen und an den Enden des Gehäuses positioniert sind, wobei mindestens ein Teil der Teile konfiguriert ist, um sich genügend um die Seiten der Schnittstellenvorrichtung zu wickeln, zwecks besagter Verzahnung, während sie als Führungen für die Chipkarte während der Einfügung der Chipkarte dienen; sowie dadurch, dass:
die obere Abdeckung (TC) und die Bodenabdeckung (BC) des Weiteren derart angepasst sind, dass, wenn sie so verzahnt sind, sie zerstörungsfrei voneinander entfernbar sind.

2. Gehäuse (H) nach Anspruch 1, wobei die obere Abdeckung und die Bodenabdeckung vollständig aus Blech sind.

3. Gehäuse (H) entsprechend einem beliebigen der Ansprüche 1 oder 2, wobei besagte Verzahnung an den Seiten des Gehäuses (H) erfolgt.

4. Das Gehäuse (H) entsprechend einem beliebigen der Ansprüche 1 bis 3, wobei das Gehäuse (H) weiter **dadurch gekennzeichnet ist, dass** die obere Abdeckung (TC) und die Bodenabdeckung (BC) manuell voneinander entfernbar sind.

5. Gehäuse (H) entsprechend einem beliebigen der Ansprüche 1 bis 4, wobei die obere Abdeckung folgendes umfasst:
erste zwei obere Abdeckungslaschen (TBT), die an gegenüberliegenden Seiten der oberen Abdeckung (TC) zu dem ersten Ende hin positioniert sind; und
zweite zwei obere Abdeckungslaschen (TBT), die auf gegenüberliegenden Seiten der oberen Abdeckung (TC) zu dem zweiten Ende hin positioniert sind;
wobei die oberen Abdeckungslaschen (TBT) folgendes umfassen:
einen ersten Abschnitt im wesentlichen senkrecht zu einer Ebene der oberen Abdeckung (TC); und
einen zweiten Abschnitt im wesentlichen senkrecht zu dem ersten Abschnitt und unterhalb der oberen Abdeckung (TC) gelegen;
und wobei die Bodenabdeckung (BC) folgendes umfasst:
erste zwei Bodenabdeckungslaschen (TBB); und
zweite zwei Bodenabdeckungslaschen (TBB);
wobei jede der Bodenabdeckungslaschen (TBB) einer der oberen Abdeckungslaschen (TBT) entspricht und derart angepasst ist, dass besagte Verzahnung mit ihrer entsprechenden oberen Abdeckungslaschen (TBT) erfolgt;
wobei die Bodenabdeckungslaschen (TBB) folgendes umfassen:
einen ersten Abschnitt, der im wesentlichen senkrecht zu der Bodenabdeckung (BC) ist und einen Schlitz (SLIT) umfasst, der sich mit dem zweiten Abschnitt der entsprechenden oberen Abdeckungslaschen (TBT) verzahnen kann.

## Revendications

1. Boîtier (H) pour un dispositif d'interface (IF) destiné à être utilisé avec un module d'accès conditionnel sur une carte à puce (CC) conforme à une norme de dimension de carte de crédit, le module d'accès conditionnel étant destiné à effectuer des opérations sécurisées, le boîtier (H) comprenant une fente (SLT) à travers laquelle la carte à puce (CC) peut être insérée, ledit boîtier (H):
s'étendant dans une direction longitudinale entre une première extrémité et une deuxième extrémité, la première extrémité ayant la fente;
ayant deux côtés opposés s'étendant le long de la direction longitudinale;
dimensionné pour être conforme à une norme PCMCIA, et
comprenant:
un couvercle supérieur comprenant du matériau métallique (TC); et
un couvercle inférieur comprenant du matériau métallique (BC);
ledit couvercle supérieur (TC) et ledit couvercle inférieur (BC) étant adaptés pour s'emboîter l'un dans l'autre;
ledit boîtier (H) étant **caractérisé en ce que**:
le couvercle supérieur (TC) et le couvercle inférieur (BC) sont adaptés de sorte que ledit emboîtement a lieu entre des parties dudit couvercle supérieur (TC) et dudit couvercle inférieur (BC), lesdites parties comprenant seulement du métal et étant situées vers les extrémités du boîtier, au moins une partie desdites parties étant configurée pour s'envelopper suffisamment autour des côtés du dispositif d'interface afin de fournir ledit emboîtement tout en servant de guides pour la carte à puce pendant l'insertion de la carte à puce; et **en ce que**:
le couvercle supérieur (TC) et le couvercle inférieur (BC) sont en outre adaptés de sorte que, ainsi emboîtés, ils sont détachables l'un de l'autre de manière non destructive.

2. Boîtier (H) selon la revendication 1, où ledit couvercle supérieur et ledit couvercle inférieur sont fabriqués entièrement en tôle.

3. Boîtier (H) selon l'une quelconque des revendications 1 ou 2, où ledit emboîtement a lieu sur les côtés du boîtier (H).

4. Boîtier (H) selon l'une quelconque des revendications 1 à 3, où ledit boîtier (H) est en outre **caractérisé en ce que** le couvercle supérieur (TC) et le couvercle inférieur (BC) sont adaptés pour être manuellement détachables l'un de l'autre.

5. Boîtier (H) selon l'une quelconque des revendications 1 à 4, où le couvercle supérieur comprend:
deux premières languettes de couvercle supérieur (TBT) situées sur des côtés opposés du couvercle supérieur (TC) vers la première extrémité; et
deux deuxièmes languettes de couvercle supérieur (TBT) situées sur des côtés opposés du couvercle supérieur (TC) vers la deuxième extrémité; lesdites languettes de couvercle supérieur (TBT) ayant:
une première section substantiellement perpendiculaire à un plan du couvercle supérieur (TC); et
une deuxième section substantiellement perpendiculaire à la première section et se trouvant au-dessous du couvercle supérieur (TC);
et où le couvercle inférieur (BC) comprend:
deux premières languettes de couvercle inférieur (TBB); et
deux deuxièmes languettes de couvercle inférieur (TBB);
chacune des languettes de couvercle inférieur (TBB) correspondant à une des languettes de couvercle supérieur (TBT) et adaptée de sorte que ledit emboîtement a lieu avec sa languette de couvercle supérieur correspondante (TBT);
lesdites languettes de couvercle inférieur (TBB) ayant:
une première section, substantiellement perpendiculaire au couvercle inférieur (BC) et ayant une fente (SLIT) adaptée pour être emboîtée avec la deuxième section de la languette de couvercle supérieur correspondante (TBT).
